# EUROPEAN PATENT APPLICATION

(11) **EP 4 468 503 A1**
(43) Date of publication of application: **27.11.2024**
(21) Application number: 23747357.4
(22) Date of filing: 26.01.2023
(51) Int. Cl.: H01M 50/449, H01M 50/446, H01M 50/431, H01M 50/403, H01M 50/411, H01M 50/489, H01M 10/052

(54) **SEPARATOR FOR ELECTROCHEMICAL DEVICE AND ELECTROCHEMICAL DEVICE CONTAINING SAME**

(30) Priority: 26.01.2022 KR 20220011666
(71) Applicant: LG Chem, Ltd., Yeongdeungpo-gu Seoul 07336 (KR)
(72) Inventor: LEE, A-Young, Daejeon 34122 (KR); LEE, Joo-Sung, Daejeon 34122 (KR)
(74) Representative: Hoffmann Eitle
(86) International application number: PCT/KR2023/001221
(87) International publication number: WO 2023/146316

(57) **Abstract**

Provided is separator for an electrochemical device, including a polymer porous support, and an inorganic composite porous layer formed on at least one surface of the porous support, wherein the inorganic composite porous layer includes a binder polymer and an inorganic filler, the binder polymer includes an amorphous polymer having a glass transition temperature (Tg) of 180°C or higher, the content of the inorganic filler is 30-200 parts by weight based on 100 parts by weight of the binder polymer, and the separator shows a dielectric breakdown voltage of 2 kV or more. The separator for an electrochemical device provides an electrochemical device with improved voltage resistance characteristics to realize a high dielectric breakdown voltage, and can provide a reduced short-circuit generation ratio (defect rate in a Hi-Pot test) even under a high voltage condition.

## Description

### TECHNICAL FIELD

The present disclosure relates to a separator for an electrochemical device and an electrochemical device including the same.

The present application claims priority to Korean Patent Application No. 10-2022-0011666 filed on January 26, 2022 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. Particularly, development of secondary batteries as energy storage systems rechargeable based on the electrochemical principle has been focused. More recently, active studies have been conducted about designing a novel electrode and battery in order to improve the capacity density and specific energy in developing such batteries.

Particularly, a lithium-ion secondary battery is a repeatedly usable battery in which lithium ions reciprocate between the positive electrode and the negative electrode to store and generate electricity. The lithium-ion secondary battery is characterized in that it shows a high voltage and energy density, long cycle life and high preservability and provides a high output. Therefore, the application fields of such a lithium secondary battery have been expanded diversely to a portable IT instrument, a battery for electric vehicles, an energy storage system (ESS), or the like. Among such application fields, distribution of electric vehicles is the main key to the secondary battery growth and is a major growth engine of the secondary battery market.

The main four constitutional elements forming such a secondary battery are a positive electrode, a negative electrode, an electrolyte and a separator. Among them, the separator functions to isolate both electrodes, i.e. the positive electrode and the negative electrode, from each other to interrupt an electrical short-circuit caused by a physical contact between both electrodes, and to provide a channel through which ions can move between both electrodes through the electrolyte supported in micropores, thereby imparting ion conductivity.

Such a separator includes a microporous polymer film material having the above-mentioned functions, and particularly, a polyolefin-based separator has been used widely. Typical examples of the polyolefin-based separator include a polyethylene (PE)- or polypropylene (PP)-based polymer material.

However, such a polyolefin-based separator is shrunk or molten at high temperature, and thus shows low heat resistance. To solve such a problem, there has been used widely a method for coating the surface of the separator with inorganic particles and a binder polymer to improve the heat resistance. However, it is still highly likely that a positive electrode and a negative electrode are in contact with each other to cause a short-circuit due to the shrinking or melting of the separator when the temperature of a battery is increased to high temperature by internal/external stimuli. Therefore, there is a need for reinforcing the safety of a battery.

In addition, there is an increasing need for thin filming of a separator to increase the energy density of a battery. However, the problem of degradation of insulation property or mechanical strength may occur, since a sufficient amount of insulation material cannot be incorporated due to the thin filming of the separator. Under these circumstances, there is a need for a separator having high mechanical strength, while showing excellent insulation property.

### DISCLOSURE

### Technical Problem

The present disclosure is designed to solve the problems of the related art, and therefore the present disclosure is directed to providing a separator for an electrochemical device having excellent insulation property and showing a reduced short-circuit generation ratio, and an electrochemical device including the same.

The present disclosure is also directed to providing a method for manufacturing a separator for an electrochemical device through a dipping phase separation process to provide the separator with excellent insulation property and a reduced short-circuit generation ratio.

It will be easily understood that the objects and advantages of the present disclosure may be realized by the means shown in the appended claims and combinations thereof.

### Technical Solution

The inventors of the present disclosure have found that the above-mentioned problems can be solved by the separator for an electrochemical device, the electrochemical device including the same and the method for manufacturing the same as described hereinafter.

According to the first embodiment of the present disclosure, there is provided a separator for an electrochemical device, including a polymer porous support, and an inorganic composite porous layer formed on at least one surface of the porous support,
wherein the inorganic composite porous layer includes a binder polymer and an inorganic filler,
the binder polymer includes an amorphous polymer having a glass transition temperature (Tg) of 180°C or higher,
the content of the inorganic filler is 30-200 parts by weight based on 100 parts by weight of the binder polymer, and
the separator shows a dielectric breakdown voltage of 2 kV or more.

According to the second embodiment of the present disclosure, there is provided the separator for an electrochemical device as defined in the first embodiment, which shows a dielectric breakdown voltage of 2-6 kV.

According to the third embodiment of the present disclosure, there is provided the separator for an electrochemical device as defined in the first or the second embodiment, which shows a dielectric breakdown strength of 4.5 kV/milli-inch or more.

According to the fourth embodiment of the present disclosure, there is provided the separator for an electrochemical device as defined in any one of the first to the third embodiments, which has a total thickness of 5-20 µm.

According to the fifth embodiment of the present disclosure, there is provided the separator for an electrochemical device as defined in any one of the first to the fourth embodiments, wherein the amorphous polymer having a glass transition temperature (Tg) of 180°C or higher includes polyimide (PI), polyamideimide (PAI), polyetherimide (PEI), polyphenylsulfone (PPSU), polyethersulfone (PES), polysulfone (PSU), or two or more of them.

According to the sixth embodiment of the present disclosure, there is provided the separator for an electrochemical device as defined in any one of the first to the fifth embodiments, wherein the binder polymer consists of an amorphous polymer having a glass transition temperature (Tg) of 180°C or higher.

According to the seventh embodiment of the present disclosure, there is provided the separator for an electrochemical device as defined in any one of the first to the sixth embodiments, wherein the content of the inorganic filler is 40-185 parts by weight based on 100 parts by weight of the binder polymer.

According to the eighth embodiment of the present disclosure, there is provided the separator for an electrochemical device as defined in any one of the first to the seventh embodiments, wherein the inorganic filler has an average particle diameter of 20-700 nm.

According to the ninth embodiment of the present disclosure, there is provided an electrochemical device including a positive electrode, a negative electrode and a separator interposed between the positive electrode and the negative electrode, wherein the separator is the separator for an electrochemical device as defined in any one of the first to the eighth embodiments.

According to the tenth embodiment of the present disclosure, there is provided the electrochemical device as defined in the ninth embodiment, which is a lithium secondary battery.

According to the eleventh embodiment of the present disclosure, there is provided a method for manufacturing the separator for an electrochemical device as defined in any one of the first to the eighth embodiments, including the steps of:
(S1) preparing a polymer porous support;
(S2) applying a slurry containing an amorphous polymer having a glass transition temperature of 180°C or higher, an inorganic filler and a solvent to at least one surface of the polymer porous support; and
(S3) dipping the polymer porous support coated with the slurry in a composition containing a non-solvent for the amorphous polymer, followed by drying, to form an inorganic composite porous layer.

According to the twelfth embodiment of the present disclosure, there is provided the method for manufacturing the separator for an electrochemical device as defined in the eleventh embodiment, wherein the non-solvent includes water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them.

### Advantageous Effects

The separator for an electrochemical device according to the present disclosure has excellent heat resistance and mechanical strength, while ensuring a high dielectric breakdown voltage, and thus shows a reduced short-circuit generation ratio.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

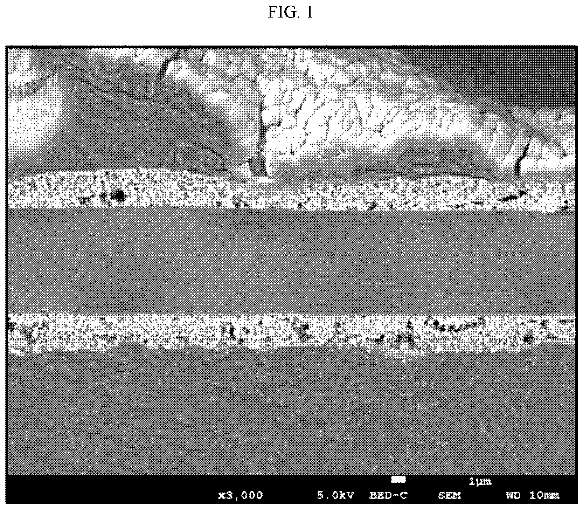

FIG. 1 is a scanning electron microscopic (SEM) image of the separator according to Example 5.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression `a part includes an element' does not preclude the presence of any additional elements but means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression `A and/or B' means `A, B or both of them'.

In one aspect of the present disclosure, there is provided a separator for an electrochemical device, including a polymer porous support, and an inorganic composite porous layer formed on at least one surface of the porous support,
wherein the inorganic composite porous layer includes a binder polymer and an inorganic filler,
the binder polymer includes an amorphous polymer having a glass transition temperature (Tg) of 180°C or higher,
the content of the inorganic filler is 30-200 parts by weight based on 100 parts by weight of the binder polymer, and
the separator shows a dielectric breakdown voltage of 2 kV or more.

The separator according to the present disclosure provides an electrochemical device with improved voltage resistance, thereby realizing a high dielectric breakdown voltage. In addition, the separator according to the present disclosure can prevent over-detection of a defected separator in a Hi-Pot test, thereby providing an improved test yield. The Hi-Pot test is also related with the thickness of a separator, and thus the thin-film separator disclosed herein is advantageous in that it can prevent over-detection of defects.

The separator according to the present disclosure shows a dielectric breakdown voltage of 2 kV or higher. When the separator shows a dielectric breakdown voltage of less than 2 kV, it has physical properties similar to those of the polymer porous support to cause an increase in defect rate in the Hi-Pot test, resulting in poor voltage resistance. For example, the separator may show a dielectric breakdown voltage of 2-6 kV, or 3-6 kV.

According to the present disclosure, 'dielectric breakdown voltage' refers to the highest voltage against which an insulator can resist. In other words, when voltage is applied to an insulator, while increasing the voltage application, an insulator loses its insulation property and shows increased conductivity at a high voltage exceeding a specific voltage value. The dielectric breakdown voltage means the voltage at this time point.

The dielectric breakdown voltage may be determined by locating an insulator between metal plates, and allowing direct current to pass through the insulator under a predetermined voltage boosting condition. For example, the dielectric breakdown voltage may be determined by using an AC/DC/IR Hi-Pot tester. After an object to be tested is disposed between an aluminum jig and a cooper jig, a current of 0.5 mA under the condition of DC and a voltage boosting rate of 100 V/s (up to 6 kV) are set, the test is completed when a short-circuit is generated while the voltage is increased, and the voltage at this time point can be defined as the dielectric breakdown voltage.

According to an embodiment of the present disclosure, the separator may have a dielectric breakdown strength of 4.5 kV/milli-inch or more. Preferably, the separator may have a dielectric breakdown strength of 4.5-7 kV/milli-inch, or 4.8-7 kV/milli-inch. When the dielectric breakdown strength satisfies the above-defined range, there is an advantageous effect in terms of the improvement of a Hi-Pot test yield.

As used herein, `dielectric breakdown strength' may be calculated by dividing the dielectric breakdown voltage by the thickness of a sample, i.e. by dividing the dielectric breakdown voltage by the thickness of the separator.

Although the thickness of the separator according to the present disclosure is not particularly limited, the separator may have a thickness of 5-20 µm. Preferably, the separator may show improved insulation property and heat resistance/stability in a range of thickness of 8-20 µm, or 10-18 µm.

According to an embodiment of the present disclosure, the polymer porous support is not particularly limited, as long as it has a porous structure. For example, the polymer porous support may be a porous polymer substrate, particularly, a porous polymer film substrate or a porous polymer nonwoven substrate.

Particular examples of the porous polymer substrate include a porous polymer film made of polyolefin, such as polyethylene or polypropylene. For example, the porous polymer film substrate made of polyolefin may be one realizing a shut-down function at a temperature of 80-130°C.

Herein, the porous polymer film may be formed of polyolefin, such as polyethylene (e.g. high-density polyethylene, linear low-density polyethylene, low-density polyethylene or ultrahigh-molecular weight polyethylene), polypropylene, polybutylene or polypentene, alone or a combination thereof, or a derivative thereof.

Typical examples of commercially available porous polymer films made of polyolefin, which may be used as such polymer porous supports, include wet polyethylene-based films (Asahi-Kasei E-Materials, Toray, SK IE Technology, Shanghai Energy, Sinoma, Entek), dry polypropylene-based films (Shenzhen Senior, Cangzhou Mingzhu), dry polypropylene/polyethylene multilayer structure-based films (Polypore, Ube), or the like, but are not limited thereto.

In addition, the porous polymer film substrate may be obtained by molding various polymers, such as polyester, other than polyolefin into the shape of a film. Further, the porous polymer film substrate may be formed to have a laminate structure having two or more film layers. Herein, each film layer may include a polymer, such as the above-mentioned polyolefin, polyester, or the like, alone or in combination.

Besides the polyolefin, the porous polymer film substrate and the porous nonwoven substrate may be formed of polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, or the like, alone or in combination.

There is no particular limitation in the thickness of the polymer porous support, but the polymer porous support may have a thickness of 1 µm or more, 3 µm or more, 15 µm or less, or 10 µm or less. When the thickness satisfies the above-defined range, it is possible to improve the problem of the polymer porous support functioning as a resistance layer, while maintaining the mechanical properties.

The pore size and porosity of the polymer porous support are not particularly limited, but the polymer porous support may have a porosity of 10-95% and a pore size (diameter) of 0.1-50 µm. When the pore size and porosity satisfy the above-defined ranges, it is possible to prevent the polymer porous support from functioning as a resistance layer and to allow the polymer porous support to maintain its mechanical properties. In addition, the polymer porous support may have a shape of fibers or membrane.

The inorganic composite porous layer is disposed on one side of the polymer porous support, and includes a binder polymer and an inorganic filler.

In addition, the inorganic composite porous layer is a layer forming the separator and functions as an isolation layer preventing a short-circuit between a positive electrode and a negative electrode, while preventing the polymer porous support from being in direct contact with lithium metal.

The inorganic composite porous layer may have a porosity of 5-95%, but is not limited thereto. The inorganic composite porous layer may have a thickness of 1 µm or more, 3 µm or more, 15 µm or less, or 10 µm or less. When the thickness satisfies the above-defined range, it is possible to improve the heat resistance, to inhibit the generation of a short-circuit, to accomplish the thin-filming of a separator, and to provide excellent insulation property.

In the inorganic composite porous layer, the inorganic filler particles are bound to one another by the binder polymer, while they are packed and are in contact with one another, thereby forming interstitial volumes among the inorganic filler particles, and the interstitial volumes among the inorganic filler particles become vacant spaces to form pores. In other words, the binder polymer attaches the inorganic filler particles to one another so that they may retain their binding states, and for example, the binder polymer connects the inorganic filler particles with one another and fixes them. In addition, the pores of the inorganic composite porous layer are those formed by the interstitial volumes among the inorganic filler particles which become vacant spaces, wherein the spaces are defined by the inorganic filler particles facing each other substantially in a closely packed or densely packed structure of the inorganic filler particles.

The inorganic filler also functions as a spacer which allows formation of the vacant spaces among the inorganic filler particles to form micropores and can retain a physical shape, and generally undergoes no change in physical properties in nature even at a high temperature of 200°C or higher, and thus the resultant organic/inorganic composite porous film has excellent heat resistance.

Therefore, in a lithium secondary battery including the separator, it is less likely that both electrodes cause a complete short-circuit by virtue of the inorganic composite porous layer, even when the polymer porous support is broken in the battery under a severe condition caused by internal or external factors, such as high temperature, overcharge, external impact, or the like. If any short-circuit occurs, it is possible to inhibit the short-circuit zone from expanding, and thus it is possible to contribute to the improvement of the safety of the battery.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li⁺) of operating voltage of an applicable electrochemical device. Particular examples of the inorganic filler include alumina (Al₂O₃), fumed alumina, aluminum hydroxide (Al(OH)₃), magnesium hydroxide (Mg(OH)₂), boehmite (AlOOH), or a mixture of two or more of them. Particularly, alumina (Al₂O₃) may be used.

The inorganic filler may have an average particle diameter (D₅₀) of 20-700 nm in order to form an inorganic composite porous layer having a uniform thickness and to provide the inorganic composite porous layer with a suitable level of porosity. Particularly, the inorganic filler may have an average particle diameter of 100-500 nm. When the average particle diameter (D₅₀) of the inorganic filler satisfies the above-defined range, it is possible for the slurry for an inorganic composite porous layer to maintain its dispersibility to allow easy control of the physical properties of the separator. It is also possible to prevent the problem of degradation of the mechanical properties, caused by an excessive increase in the thickness of the separator, and the problem of generation of an internal short-circuit during the charge/discharge of a battery, caused by an excessively large pore size. In addition, the packing density may be increased to improve the heat shrinkage, and the above-defined range of particle size may provide high heat resistance.

According to the present disclosure, the average particle diameter (D₅₀) of the inorganic filler may be defined as the particle diameter at the point of 50% in the particle diameter distribution. The particle diameter may be determined through the observation with electron microscopy using scanning electron microscopy (SEM), field emission scanning electron microscopy (FE-SEM), or the like, or by using the laser diffraction method. Particularly, in the case of the laser diffraction method, the inorganic filler is dispersed in a dispersion medium and introduced to a commercially available laser diffraction particle size analyzer (e.g. Microtrac MT 3000), about 28 kHz of ultrasonic waves are irradiated thereto at an output of 60 W, and then the average particle diameter (D₅₀) may be calculated at the point of 50% in the particle diameter distribution determined by the analyzer system.

In addition, the inorganic filler may be primary particles as single particles, or secondary particles formed by aggregation of the primary particles.

The content of the inorganic filler is 30-200 parts by weight based on 100 parts by weight of the binder polymer. Particularly, the content of the inorganic filler may be 30 parts by weight or more, 40 parts by weight or more, 200 parts by weight or less, or 185 parts by weight or less, based on 100 parts by weight of the binder polymer. When the content of the inorganic filler satisfies the above-defined range, it is possible to prevent the problem of a decrease in pore size and porosity of the resultant inorganic composite porous layer, caused by an excessive increase in content of the binder polymer. It is also possible to solve the problem of a decrease in adhesion among the inorganic filler particles and degradation of the peeling resistance of the resultant inorganic composite porous layer, caused by a decrease in content of the binder polymer.

The binder polymer includes an amorphous polymer having a glass transition temperature (Tg) of 180°C or higher. Particularly, the binder polymer may be an amorphous polymer having a glass transition temperature (Tg) of 180-350°C. Particular examples of the amorphous polymer include polyimide (PI), polyamideimide (PAI), polyetherimide (PEI), polyphenylsulfone (PPSU), polyethersulfone (PES), polysulfone (PSU), or two or more of them, but are not limited thereto. Particularly, among the amorphous binder polymers, polyimide has a glass transition temperature of about 250-340°C, polyamideimide has a glass transition temperature of about 280-290°C, polyetherimide has a glass transition temperature of about 217°C, polyphenylsulfone has a glass transition temperature of about 222°C, polyethersulfone has a glass transition temperature of about 230°C, and polysulfone has a glass transition temperature of about 185°C.

According to an embodiment of the present disclosure, the binder polymer may consist of the amorphous polymer having a glass transition temperature of 180°C or higher.

In another aspect of the present disclosure, there is provided a method for manufacturing s separator for an electrochemical device, including the steps of:
(S1) preparing a polymer porous support;
(S2) applying a slurry containing an amorphous polymer having a glass transition temperature of 180°C or higher, an inorganic filler and a solvent to at least one surface of the polymer porous support; and
(S3) dipping the polymer porous support coated with the slurry in a composition containing a non-solvent for the amorphous polymer, followed by drying, to form an inorganic composite porous layer.

When applying the inorganic filler to the inorganic composite porous layer, the slurry may be prepared by dissolving the amorphous polymer in a solvent (which may be a dispersion medium for the inorganic filler), adding the inorganic filler thereto, and dispersing the inorganic filler. Herein, the inorganic filler may be added after being pulverized into a suitable size. In a variant, the inorganic filler may be added to a solution of the amorphous polymer, and then pulverized and dispersed by using a ball milling process, or the like.

The solvent may have a solubility parameter similar to the solubility of the binder polymer and a low boiling point. This is because such a solvent allows homogeneous mixing and may be removed with ease subsequently.

Particular examples of the solvent include at least one compound selected independently from acetone, tetrahydrofuran, methylene chloride, chloroform, dimethyl formamide, N-methyl-2-pyrrolidone, cyclohexane, methanol, ethanol, isopropyl alcohol and water, or a mixture of two or more of them.

Herein, the solvent may function as a solvent capable of dissolving the binder polymer, or as a dispersion medium capable of dispersing the binder polymer, depending on the particular type of the binder polymer to be mixed in combination therewith.

According to an embodiment of the present disclosure, methods for applying the slurry for coating to the polymer porous support may be classified into pre-metering methods and post-metering methods. The pre-metering methods include predetermining the coating amount and introducing the slurry, and particular examples thereof include slot die coating, gravure coating, or the like. The post-metering methods include applying the slurry as a coating solution to the polymer porous support in a sufficient coating amount and raking out the slurry to a predetermined amount, and particular examples thereof include bar coating, or the like. In addition to the above-mentioned methods, there is direct metering coating including a combination of the pre-metering method with the post-metering method.

The slurry for coating may be applied by any non-limiting method, including the above-mentioned methods, and then the polymer porous support coated with the slurry for coating may be dipped in a composition containing a non-solvent to cause phase separation, thereby forming an inorganic composite porous layer.

According to an embodiment of the present disclosure, the non-solvent may be an aqueous solvent, or a mixture of an aqueous solvent with an organic solvent. Particular examples of the non-solvent include water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them. Particularly, the non-solvent may include a mixture of water with N-methyl-2-pyrrolidone or a mixture of water with dimethyl acetamide.

In still another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrodes used in combination with the separator according to the present disclosure are not particularly limited, and may be obtained by allowing electrode active materials to be bound to an electrode current collector through a method generally known in the art.

Among the electrode active materials, non-limiting examples of the positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof may be used.

Non-limiting examples of the negative electrode active material include conventional negative electrode active materials that may be used for the negative electrodes for conventional electrochemical devices. Particular examples of the negative electrode active material include lithium-intercalating materials, such as lithium metal or lithium alloys, carbon, petroleum coke, activated carbon, graphite or other carbonaceous materials, silicon, silicon oxide, or the like.

Non-limiting examples of the positive electrode current collector include foil made of aluminum, nickel or a combination thereof. Non-limiting examples of the negative electrode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

In yet another aspect, the present disclosure provides a battery module which includes a battery including an electrode assembly as a unit cell, a battery pack including the battery module, and a device including the battery pack as an electric power source. Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Examples

The separator according to each of Examples and Comparative Examples was obtained as follows.

### Example 1

Polyetherimide (PEI, weight average molecular weight 128,000) was dissolved in N-methyl-2-pyrrolidone (NMP) as an organic solvent, and Al₂O₃ as an inorganic filler having an average particle diameter of 100 nm was dispersed therein to prepare a slurry. The content of the inorganic filler was 40 parts by weight based on 100 parts by weight of polyetherimide.

The resultant slurry was applied to one surface of a polyethylene porous support (thickness 9 µm, porosity 45%), and introduced to a water-containing solidifying bath for the purpose of non-solvent induced phase separation (NIPS), followed by drying.

### Examples 2-5 and Comparative Examples 1-4

Each separator was obtained in the same manner as Example 1, except that the content of the binder polymer and that of the inorganic filler were changed as shown in the following Table 1.

**[Table 1]**

| | Binder polymer | Content of inorganic filler based on 100 parts by weight of binder polymer (parts by weight)) | Thickness of separator (µm) | Dielectric breakdown voltage (kV) | Dielectric breakdown strength (kV/milli-inch) | Remarks |
|---|---|---|---|---|---|---|
| Ex. 1 | PEI | 40 | 12.7 | 2.93 | 6.00 | - |
| Ex. 2 | PEI | 70 | 14.0 | 3.29 | 5.96 | - |
| Ex. 3 | PEI | 140 | 11.6 | 2.38 | 5.23 | - |
| Ex. 4 | PEI | 185 | 11.8 | 2.35 | 5.07 | - |
| Ex. 5 | PEI/ PVdF-HFP | 65 | 11.8 | 2.30 | 5.07 | - |
| Comp. Ex. 1 | PVdF-HFP | - | 13.0 | 1.80 | 3.52 | - |
| Comp. Ex. 2 | PVdF-HFP | 476 | 16.3 | 1.95 | 3.04 | - |
| Comp. Ex. 3 | PVdF-HFP | 180 | 18.0 | 1.90 | 2.68 | - |
| Comp. Ex. 4 | PEI | 210 | - | - | - | Inorganic filler particles cannot be bound to one another to cause contamination of solidifying bath during dipping phase separation coating, and inorganic composite porous layer cannot be formed. |

### Evaluation of Physical Properties of Separator

Evaluation of the physical properties of the separator according to each of Examples and Comparative Examples was carried out as follows.

### (1) Thickness of Separator

The thickness of each separator was measured by using a thickness gauge (VL-50S-B, available from Mitutoyo).

### (2) Determination of Dielectric Breakdown Voltage

The voltage may be determined by using an AC/DC/IR Hi-Pot tester. After an object to be tested was disposed between an aluminum jig and a cooper jig, a current of 0.5 mA under the condition of DC and a voltage boosting rate of 100 V/s (up to 6 kV) were set. Then, the voltage when a short-circuit was generated while the voltage was increased was determined as the dielectric breakdown voltage.

## Claims

1. A separator for an electrochemical device, comprising a polymer porous support, and an inorganic composite porous layer formed on at least one surface of the porous support,
wherein the inorganic composite porous layer comprises a binder polymer and an inorganic filler,
the binder polymer comprises an amorphous polymer having a glass transition temperature (Tg) of 180°C or higher,
the content of the inorganic filler is 30-200 parts by weight based on 100 parts by weight of the binder polymer, and
the separator shows a dielectric breakdown voltage of 2 kV or more.

2. The separator for an electrochemical device according to claim 1, which shows a dielectric breakdown voltage of 2-6 kV.

3. The separator for an electrochemical device according to claim 1, which shows a dielectric breakdown strength of 4.5 kV/milli-inch or more.

4. The separator for an electrochemical device according to claim 1, which has a total thickness of 5-20 µm.

5. The separator for an electrochemical device according to claim 1, wherein the amorphous polymer having a glass transition temperature (Tg) of 180°C or higher includes polyimide (PI), polyamideimide (PAI), polyetherimide (PEI), polyphenylsulfone (PPSU), polyethersulfone (PES), polysulfone (PSU), or two or more of them.

6. The separator for an electrochemical device according to claim 1, wherein the binder polymer consists of an amorphous polymer having a glass transition temperature (Tg) of 180°C or higher.

7. The separator for an electrochemical device according to claim 1, wherein the content of the inorganic filler is 40-185 parts by weight based on 100 parts by weight of the binder polymer.

8. The separator for an electrochemical device according to claim 1, wherein the inorganic filler has an average particle diameter of 20-700 nm.

9. An electrochemical device comprising a positive electrode, a negative electrode and a separator interposed between the positive electrode and the negative electrode, wherein the separator is the separator for an electrochemical device as defined in any one of claims 1 to 8.

10. The electrochemical device according to claim 9, which is a lithium secondary battery.

11. A method for manufacturing the separator for an electrochemical device as defined in claim 1, comprising the steps of:
(S1) preparing a polymer porous support;
(S2) applying a slurry containing an amorphous polymer having a glass transition temperature of 180°C or higher, an inorganic filler and a solvent to at least one surface of the polymer porous support; and
(S3) dipping the polymer porous support coated with the slurry in a composition containing a non-solvent for the amorphous polymer, followed by drying, to form an inorganic composite porous layer.

12. The method for manufacturing the separator for an electrochemical device according to claim 11, wherein the non-solvent comprises water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them.
